# EUROPÄISCHE PATENTSCHRIFT

(11) **EP 0 788 449 B1**
(45) Veröffentlichungstag und Bekanntmachung des Hinweises auf die Patenterteilung: **26.05.1999**
(21) Anmeldenummer: 95936553.7
(22) Anmeldetag: 26.10.1995
(51) Int. Cl.: B65D 75/26, B32B 7/02

(54) **KINDERSICHERE VERPACKUNG FÜR WIRKSTOFFPFLASTER**
CHILDREN-PROOF PACKAGE FOR ACTIVE SUBSTANCE-CONTAINING PLASTER
EMBALLAGE A L'EPREUVE DES ENFANTS POUR PANSEMENT CONTENANT DES PRINCIPES ACTIFS

(30) Priorität: 31.10.1994 DE 4438527
(43) Veröffentlichungstag der Anmeldung: 13.08.1997
(73) Patentinhaber: LTS LOHMANN Therapie-Systeme GmbH, 56567 Neuwied (DE)
(72) Erfinder: KOCH, Reinhard, D-53489 Sinzig (DE); MÜLLER, Frank, D-56579 Rengsdorf (DE); BECHER, Frank, D-56072 Koblenz (DE)
(74) Vertreter: Flaccus, Rolf-Dieter, Dr.
(86) Internationale Anmeldenummer: EP9504205
(87) Internationale Veröffentlichungsnummer: WO9613445

(56) Entgegenhaltungen:
- GB-A- 1 503 913
- US-A- 4 398 635

## Beschreibung

Die Erfindung betrifft eine kindersichere Verpackung für Wirkstoffpflaster.
Entsprechend einem bekannten Grundsatz sollen Medikamente für Kinder unzugänglich aufbewahrt werden. Nach der Lebenserfahrung reichen verbale Verbote nicht aus, um Kinder vom Zugang und/oder Zugriff auf erreichbare Medikamente abzuhalten, wenn fallsweise die Neugierde stärker ist als das Verbot.
Um hier Abhilfe zu schaffen und Kinder vor dem Umgang mit gefährlichen Stoffen zu schützen, wurden bereits Kindersicherungen an Schraubverschlüssen von Behältern entwickelt und sind für gefährliche Stoffe seit längerem eingeführt.

Für eine Reihe von Krankheitszuständen und/oder zur Steuerung von Körperfunktionen wie beispielsweise Blutdruckregulierung, Raucherentwöhnung, Familienplanung etc. hat die Anwendung von Wirkstoffpflastern in den letzten Jahren eine immere größere Bedeutung gewonnen, deren weitere Entwicklung noch nicht abzusehen ist.

Solche Pflaster müssen aus einer Reihe von wichtigen Gründen von der Herstellung bis zur Applikation unter Verschluß durch eine geeignete Verpackung gehalten werden, die eine völlige Isolierung des Pflasters einerseits gegenüber Umwelteinflüssen, andererseits aber auch gegen Verlust von Wirkstoff, beispielsweise durch Sublimation, Verdampfung oder Diffusion flüchtiger Wirkstoffanteile ergibt und das Pflaster schützend nach außen abschließt.
Hierfür wurden bereits spezielle Verpackungsmaterialien entwickelt.
Aus der US 5,268,209 ist ein Nicotinverpackungsmaterial und Herstellungsverfahren hierfür bekannt, welches aus mehrlagigen Schichten besteht und beispielsweise eine Sperrschicht für Nicotin aus Nitrilkautschuk modifiziert mit Acrylnitril-Methylacrylat-Copolymer aufweist. Bevorzugt wird als Nicotin-Sperrmaterial ein verstärktes Copolymer von etwa 73 bis 77 Gew.-% Acrylnitril und 23 bis 27 Gew.-% Methylacrylat in Mischung mit etwa 8 bis 10 Gew.-Teilen von Butadien-Acrylnitril-Copolymeren mit etwa 70 Gew.-5 Polymereinheiten aus Butadienderivat vorgeschlagen. Das Packmaterial für Nicotin enthält eine Siegelschicht zur Herstellung von Packbeuteln, weiterhin eine Aluminiumfolie sowie eine Papierschicht als Träger für eine Beschriftung.

Kindersichere Verpackungen für Wirkstoffpflaster wurden bisher so ausgebildet, daß das Pflaster in einer der Eigenart des Wirkstoffs entsprechenden, beispielsweise wirkstoffundurchlässigen Umhüllung einzeln verpackt war und diese Verpackung mit einer reißfesten Umverpackung gegen Kinderzugriff, Beschädigung oder Mißbrauch gesichert war. Nachteilig ergaben sich hieraus hohe Verpackungskosten durch die doppelte Verpackung bei entsprechendem Fertigungsaufwand und Materialeinsatz.

Es besteht daher ein dringendes Bedürfnis, diese Kosten und den entsprechenden Materialeinsatz ohne Schmälerung der kindersicheren Qualität zu reduzieren.
Infolgedessen liegt der Erfindung die Aufgabe zugrunde, eine Verpackung für Wirkstoffpflaster anzugeben, die mit geringeren Kosten und geringerem Materialaufwand herstellbar und dabei besonders kindersicher ist.

Die Lösung gelingt mit einer Verpackung aus einem mehrschichtigen Packmaterial, das eine reißfeste Schicht aus einer biaxial gereckten Polyamidfolie oder einer Folie aus einem Material aus Aramidfasern oder einer Folie mit wenigstens einer Einlage aus hochfesten Fasern und eine Aluminiumfolie oder eine aluminiumbedampfte Kunststoffolie als wirkstoffundurchlässige Schicht aufweist, wobei die beiden Schichten stoffschlüssig miteinander verbunden sind.

Mit großem Vorteil weist die kindersichere Verpackung für Wirkstoffpflaster nach der Erfindung einerseits die mechanischen Festigkeitseigenschaften auf, die dafür sorgen, daß ein Kind mit seinen Händen, d.h. ohne Verwendung mechanischer Hilfsmittel wie Schere, Messer oder dergleichen an der Öffnung und Zugänglichkeit des Pflasters ausreichend wirksam gehindert ist. Andererseits enthält der Schichtaufbau des Packmaterials eine spezielle Sperrschicht zum geeigneten, vollständigen Abschluß des Wirkstoffs bzw. Verhinderung von Wirkstoffverlust gegenüber der Umwelt.

Weil die kindersichere Verpackung erfindungsgemäß ausschließlich als Primärverpackung ausgebildet ist, entfällt die bisher erforderliche Doppelverpackung; damit entfallen annähernd 50% an Verpackungsarbeit, hierfür erforderlicher Maschinenkapazität sowie Materialeinsatz. Dadurch werden mit großem Vorteil nicht nur Kosten gespart, sondern die Umwelt wird vom Abfall bzw. von der Entsorgung von Abfällen entlastet.

Vorzugsweise ist die reißfeste Schicht eine biaxial gereckte Polyamidfolie. Die Erfindung soll jedoch bei der Auswahl von geeignetem Packmaterial nicht nur auf die Verwendung der Polyamidfolie als reißfeste Schicht beschränkt sein, vielmehr kommt hierfür eine Vielzahl hochfester Materialien in Frage, wie beispielsweise Material aus Aramidfasern (z.B. Kevlar ®). Auch durch Einlage hochfester Fasern oder Gewebe aus beispielsweise dünnen Polyesterfäden, Glasfasern, Stahlgeweben oder anderen Kombinationen hergestellte reißfeste Schichten kommen für den erfindungsgemäßen Schichtaufbau des Packmaterials in Frage. Die Einlagen oder Verstärkungsfasern können zwischen zwei Schichten eingelegt oder in eine Schicht integiert sein.

Eine Ausgestaltung sieht weiter vor, daß die äußere Schicht ein Druckträger aus Papier ist oder mit bedrucktem Papier kaschiert ist.

Als wirkstoffundurchlässige Schicht wird eine Aluminiumfolie oder eine aluminiumbedampfte Kunststofffolie verwendet. Schließlich sieht eine Ausgestaltung vor, daß die innerste Schicht eine mit einem Siegelmedium kaschierte oder aus einem Siegelmedium bestehende Kunststofffolie ist.

Der Schichtaufbau des Verpackungsmaterials kann weiter so ausgebildet sein, daß die mechanisch hoch belastbare, reißfeste Schicht im äußeren Bereich des Schichtaufbaus und die den physikalischen oder chemischen Anforderungen des Wirkstoffs entsprechende dampf- und wirkstoffundurchlässige Schicht im inneren Bereich des Schichtaufbaus angeordnet ist, oder umgekehrt.

Bevorzugt umfasst der Schichtaufbau des Packmaterials:
- Papier (1)
- Kaschierkleber (2)
- Aluminiumfolie (3)
- Kaschierkleber (4)
- reißfeste Schicht (5) (Polyamidfolie)
- Kaschierkleber (6)
- Polyacrylnitril (7)

Um Kindern eine Beschädigung oder Zerstörung der Verpackung noch weiter zu erschweren, kann zusätzlich noch vorgesehen sein, daß die Papierschicht (1) außen mit einer die Haftung der Finger an der Verpackung reduzierenden Gleitschicht (8) dehäsiv ausgerüstet ist.

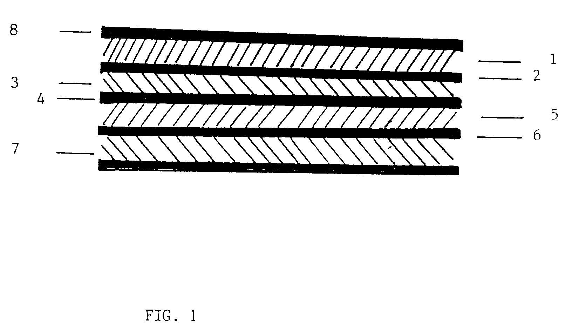

Der Schichtaufbau des für die kindersichere Verpackung für Wirkstoffpflaster erfindungsgemäß vorgesehenen Packmaterials wird in der Figur in einem Ausführungsbeispiel gezeigt, wobei die Darstellung einen Schnitt durch den Schichtaufbau zeigt. Darin bedeuten:
Eine Papierschicht (1) aus guter Papierqualität, beispielsweise gestrichenem oder superkalandriertem, ungestrichenem Papier,
einen Kaschierkleber (2), beispielsweise aus thermisch aktivierbarem Leim,
eine Aluminiumfolie (3),
einen Kaschierkleber (4),
eine reißfeste Schicht (5), beispielsweise eine Polyamidfolie oder eine Folie aus Aramid, oder eine mit Verstärkungsfasern verstärkte Kunststoff-Folie,
einen Kaschierkleber (6),
eine innere Schicht aus Polyacrylnitril (7).

Das Material kann fallweise an der äußeren Papierschicht (1) mit einer die Haftung der Finger an der Verpackung reduzierenden Gleitschicht (8) dehäsiv ausgerüstet sein. Damit wird eine Gewaltanwendung an der Verpackung weiter erschwert.

Eine beispielsweise Gewichtsangabe (g/m²) für die einzelnen Schichten zeigt bevorzugt folgende Werte:
- Papier (1) ( 40,0 g/m²)
- Kaschierkleber (2) ( 2,0 g/m²)
- Aluminiumfolie (3) ( 24,3 g/m²)
- Kaschierkleber (4) ( 2,0 g/m²)
- reißfeste Schicht (Polyamidfolie) (5) ( 17,2 g/m²)
- Kaschierkleber (6) ( 2,0 g/m²)
- Polyacrylnitril (7) ( 32,2 g/m²)

Die kindersichere Verpackung kann auch so beschaffen sein, daß die mechanisch hoch belastbare Schicht entweder aus zwei Folien mit dazwischen eingelegtem Verstärkungsmaterial oder aus einer einzigen Folie mit integriertem Verstärkungsmaterial besteht.
Weiterhin kann die kindersichere Verpackung aus zwei hochbelastbaren Flächenteilen bestehen, es kann aber auch die Maßnahme getroffen sein, daR die Verpackung aus einem hochfesten Materialteil und einem weniger festen Materialteil besteht.
Ein Verfahren zur Herstellung sieht vor, daß das Pflaster zwischen zwei Flächenteile des Verpackungsmaterials eingelegt und die Ränder der Flächenteile miteinander versiegelt werden.

Die kindersichere Verpackung für Wirkstoffpflaster unter Ausbildung als Primärverpackung aus einem Packmaterial mit mehrschichtigem Schichtaufbau nach der Erfindung ist unkompliziert, zweckmäßig und mit gegenüber der bisherigen Doppel-Verpackung erheblich wirtschaftlicheren Mitteln herstellbar, wobei auch noch durch Einsparung von Abfall die Umwelt entlastet wird.
Insofern erfüllt die Erfindung im optimaler Weise die eingangs gestellte Aufgabe.

## Patentansprüche

1. Kindersichere Verpackung für Wirkstoffpflaster aus einem mehrschichtigen Packmaterial, das eine reißfeste Schicht aus einer biaxial gereckten Polyamidfolie oder einer Folie aus einem Material aus Aramidfasern oder einer Folie mit wenigstens einer Einlage aus hochfesten Fasern und eine Aluminiumfolie oder eine aluminiumbedampfte Kunststoffolie als wirkstoffundurchlässige Schicht aufweist, wobei die beiden Schichten stoffschlüssig miteinander verbunden sind.

2. Kindersichere Verpackung nach Anspruch 1, dadurch gekennzeichnet, daß die reißfeste Schicht eine biaxial gereckte Polyamidfolie ist.

3. Kindersichere Verpackung nach Anspruch 1, dadurch gekennzeichnet, daß die reißfeste Schicht ein Material aus Aramidfasern, z.B. Kevlar ist.

4. Kindersichere Verpackung nach Anspruch 1, dadurch gekennzeichnet, daß die reißfeste Schicht ein folienförmiges Material mit wenigstens einer Einlage aus hochfesten Fasern oder Geweben aus Polyester, Polyamid, Glas oder Stahl ist.

5. Kindersichere Verpackung nach Anspruch 4, dadurch gekennzeichnet, daß die reißfähige Schicht entweder aus zwei Folien mit dazwischen eingelegtem Verstärkungsmaterial, oder aus einer einzigen Folie mit integriertem Verstärkungsmaterial besteht.

6. Kindersichere Verpackung nach Anspruch 1, dadurch gekennzeichnet, daß die äußere Schicht ein Druckträger aus Papier ist.

7. Kindersichere Verpackung nach Anspruch 1, dadurch gekennzeichnet, daß die innerste Schicht eine mit einem Siegelmedium kaschierte oder aus einem Siegelmedium bestehende Kunststofffolie ist.

8. Kindersichere Verpackung nach Anspruch 1, dadurch gekennzeichnet, daß der Schichtaufbau des Packmaterials umfasst:
- Papier (1)
- Kaschierkleber (2)
- Aluminiumfolie (3)
- Kaschierkleber (4)
- reißfeste Schicht (5)
- Kaschierkleber (6)
- Polyacrylnitril (7)

9. Verpackung nach Anspruch 9, dadurch gekennzeichnet, daß die Papierschicht (1) außen mit einer die Haftung der Finger an der Verpackung reduzierenden Gleitschicht (8) dehäsiv ausgerüstet ist.

10. Kindersichere Verpackung nach einem der Ansprüche 1 bis 8, dadurch gekennezeichnet, daß die reißfeste Schicht im äußeren Bereich des Schichtaufbaus und die wirkstoff undurchlässige Schicht im inneren Bereich des Schichtaufbaus angeordnet ist, oder umgekehrt.

11. Kindersichere Verpackung nach einem der vorhergehenden Ansprüche, dadurch gekennzeichnet, daß ein Flächtenteil derselben aus Verpackungsmaterial mit einer mechanisch hoch belastbaren, reißfesten Schicht (5) und das entgegengesetzte Flächenteil aus einem weniger belastbaren Verpackungsmaterial besteht.

12. Verfahren zur Herstellung der kindersicheren Verpackung nach einem der vorhergehenden Ansprüche 1 bis 11, dadurch gekennzeichnet, daß das Pflaster zwischen zwei Flächenteile des Verpackungsmaterials eingelegt und die Ränder der Flächenteile miteinander versiegelt werden.

## Claims

1. A childproof package for active substance patches made up of a multilayered packaging material which has a tear-resistant layer of a biaxially stretched polyamide film or of a film of aramide fiber material or of a film having at least one insertion of high-strength fibers, and an aluminium foil or an aluminized plastic film as active substance-impermeable layer, the said two layers being connected with each other in such a manner that the material of one layer is firmly connected to the material of the other.

2. The childproof package according to claim 1 characterized in that the tear-resistant layer is a biaxially stretched polyamide film.

3. The childproof package according to claim 1 characterized in that the tear-resistant layer is a material of aramide fibers, e.g. Kevlar.

4. The childproof package according to claim 1 characterized in that the tear-resistant layer is a film-like material having at least one insertion of high-strength fibers or fabrics of polyester, polyamide, glass, or steel.

5. The childproof package according to claim 4 characterized in that the tear-resistant layer consists either of two films having inserted between them a reinforcing material or of one single film with integrated reinforcing material.

6. The childproof package according to claim 1 characterized in that the outer layer is a stock made of paper.

7. The childproof package according to claim 1 characterized in that the innermost layer is a plastic film either laminated with a sealing medium or consisting of a sealing medium.

8. The childproof package according to claim 1 characterized in that the layered structure of the packaging materials includes:
- paper (1)
- laminating adhesive (2)
- aluminum foil (3)
- laminating adhesive (4)
- tear-resistant layer (5)
- laminating adhesive (6)
- polyacrylonitrile (7)

9. The package according to claim 9 characterized in that the outside of the paper layer (1) is rendered antiadhesive with a slip layer (8) reducing the adherence of fingers to the package.

10. The childproof package according to any one of claims 1 to 8 characterized in that the tear resistant layer is located in the outer region of the layered structure, and that the active substance-impermeable layer is located in the inner region of the layered structure, or vice versa.

11. The childproof package according to any one of the preceding claims characterized in that a surface portion thereof consists of packaging material having a mechanically tough, tear-resistant layer (5) and that the opposite surface portion consists of a less loadable packaging material.

12. A process for the production of the childproof package according to any one of the preceding claims 1 to 11, characterized in that the patch is inserted between two surface portions of the packaging material and that the edges of the surface portions are sealed with each other.

## Revendications

1. Emballage à l'épreuve des enfants pour pansement contenant des principes actifs, formé par un matériau d'emballage à plusieurs couches qui comprend une couche résistante à la déchirure faite d'une feuille de polyamide étirée de manière biaxiale ou d'une feuille formée d'un matériau en fibres d'aramide ou d'une feuille comprenant au moins une insertion faite de fibres hautement résistantes et, en tant que couche imperméable aux principes actifs, une feuille d'aluminium ou une feuille en matière plastique métallisée à l'aluminium, les deux couches étant reliées l'une à l'autre d'une manière assurant un contact intime entre les deux.

2. Emballage à l'épreuve des enfants selon la revendication 1, caractérisé en ce que la couche résistante à la déchirure est une feuille de polyamide étirée de manière biaxiale.

3. Emballage à l'épreuve des enfants selon la revendication 1, caractérisé en ce que la couche résistante à la déchirure est un matériau en fibres d'aramide, par exemple du kevlar.

4. Emballage à l'épreuve des enfants selon la revendication 1, caractérisé en ce que la couche résistante à la déchirure est un matériau en forme de feuilles comprenant au moins une insertion faite de fibres hautement résistantes ou de tissus en polyester, polyamide, verre ou acier.

5. Emballage à l'épreuve des enfants selon la revendication 4, caractérisé en ce que la couche susceptible d'être déchirée est formée soit de deux feuilles entre lesquelles est inséré un matériau de renforcement, soit d'une feuille unique dans laquelle est intégré un matériau de renforcement.

6. Emballage à l'épreuve des enfants selon la revendication 1, caractérisé en ce que la couche extérieure est un support d'impression en papier.

7. Emballage à l'épreuve des enfants selon la revendication 1, caractérisé en ce que la couche la plus interne est une feuille en matière plastique doublée d'un moyen de scellement ou formée d'un moyen de scellement.

8. Emballage à l'épreuve des enfants selon la revendication 1, caractérisé en ce que la structure en couches du matériau d'emballage comprend :
- papier (1)
- colle de couchage (2)
- feuille d'aluminium (3)
- colle de couchage (4)
- couche résistante à la déchirure (5)
- colle de couchage (6)
- polyacrylonitrile (7).

9. Emballage selon la revendication 8, caractérisé en ce que la couche de papier (1) est pourvue, à l'extérieur, d'une couche glissante (8) réduisant l'adhérence des doigts sur l'emballage, de manière à être anti-adhésive.

10. Emballage à l'épreuve des enfants selon l'une des revendications 1 à 8, caractérisé en ce que la couche résistante à la déchirure est située dans la région extérieure de la structure en couches et la couche imperméable aux principes actifs est située dans la région intérieure de la structure en couches, ou inversement.

11. Emballage à l'épreuve des enfants selon l'une des revendications précédentes, caractérisé en ce qu'une partie plane de l'emballage est formée par un matériau d'emballage comprenant une couche résistante à la déchirure (5) pouvant subir des charges mécaniques importantes et la partie plane opposée est formée par un matériau d'emballage supportant des charges moins importantes.

12. Procédé de fabrication de l'emballage à l'épreuve des enfants selon l'une des revendications précédentes 1 à 11, caractérisé en ce que le pansement est inséré entre deux parties planes du matériau d'emballage et les bords des parties planes sont scellés l'un à l'autre.
